(19) **Europäisches Patentamt**
**European Patent Office**
**Office européen des brevets**

(11) **EP 4 730 693 A1**

(12) **EUROPEAN PATENT APPLICATION**

(43) Date of publication:
**22.04.2026 Bulletin 2026/17**

(51) International Patent Classification (IPC):
**H04L 9/00** (2022.01)

(21) Application number: **25202914.5**

(52) Cooperative Patent Classification (CPC):
**H04L 9/50;** H04L 2209/42

(22) Date of filing: **18.09.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.10.2024 IN 202421078645**

(71) Applicant: **Tata Consultancy Services Limited Maharashtra (IN)**

(72) Inventors:
- **JEREMIAH, Namitha**
  **600017 Chennai, Tamil Nadu (IN)**
- **SESHADRI, Ashok**
  **600017 Chennai, Tamil Nadu (IN)**
- **BHATTACHARJEE, Saptarshee**
  **700156 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR SECURING PERSONAL IDENTIFIABLE INFORMATION (PII) IN BLOCKCHAIN**

(57) Current approaches allow storage of Personal Identifiable Information (PII) data on blockchain, however the user will not be allowed to delete any data from blockchain because of data immutability. As a result, even if the user doesn't want the data to remain on the blockchain platform, there is no option to delete it. Method and system disclosed herein provides an approach, in which PII data is stored in a ledger by encrypting it using a salt and key. When the user doesn't want the data to be stored in the blockchain ledger, the system deletes, upon receiving a PII data deletion request from the user, the key and the salt stored in the off-chain system, wherein the deletion of the key and the salt ensures permanent inaccessibility of PII data from the secondary blockchain ledger.

FIG. 7

**Description**

CROSS-REFERENCE TO RELATED APPLICATIONS AND PRIORITY

The present application claims priority from Indian application no. 202421078645, filed on October 16, 2024.

TECHNICAL FIELD

The disclosure herein generally relates to data security, and, more particularly, to a method and system for securing personal identifiable information (PII) in blockchain.

BACKGROUND

Organizations use the concept of Personal Identifiable Information (PII) to understand which data they store, process and manage that identifies people and may carry additional responsibility, security requirements, and in some cases legal or compliance requirements. Current technology allows storage on PII data on blockchain, however the user will not be allowed to delete any data from blockchain because of data immutability. As a result, even if the user doesn't want the data to remain on the blockchain platform, there is no option to delete it.

SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, by a system via one or more hardware processors, a service data associated with a service initiated by a user, the service data comprising a regular data and a personal identifiable information (PII) data of the user; segregating, by the system via the one or more hardware processors, the service data into the PII data and the regular data based on a PII two-dimensional (2D) abstract data structure; applying, by the system via the one or more hardware processors, a deduplication algorithm on the segregated PII data, wherein the deduplication algorithm identifies at least one new PII attribute from one or more PII attributes that is not present in a former PII hash index registry, wherein the former PII hash index registry is present in the system; creating, by the system via the one or more hardware processors, a real-time PII hash index registry for the one or more PII attributes using a data structure referencing principle, wherein the real-time PII hash index registry comprises a referencing index for each of the one or more PII attributes, wherein each referencing index comprises a PII indicator, an index value and an attribute name, wherein the created real-time PII hash index registry and regular data are stored in a primary blockchain ledger, and wherein the real-time PII hash index registry serves as a reference for pointing to an exact PII attribute of the PII data of the user; encrypting, by the system via the one or more hardware processors, the segregated PII data using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system; creating, by the system via the one or more hardware processors, one or more peer-PII attribute combinations based, at least in part, on, one or more peer names defined in a predefined peer access list (PAL) and the one or more PII attributes; generating, by the system via the one or more hardware processors, an access token for each pair of the peer-PII attribute combination of the one or more peer-PII attribute combinations using a PII data ordering technique, wherein the access token generated for each pair of the peer-PII attribute combination comprises a series of bits for a respective PII attribute, wherein a number of bits present in the series of bits is decided based on of the one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order; and storing, by the system via the one or more hardware processors, the access token generated for each pair of the peer-PII attribute combination in a tertiary blockchain ledger, wherein an access grant to the PII data of the user is decided based on stored access tokens thus enabling enhanced security to the PII data of the user.

The method further includes: receiving, by the system via the one or more hardware processors, one or more PII data disclosure requests from one or more peers of the user; determining, by the system via the one or more hardware processors, whether each of the one or more PII data disclosure requests are granted; and storing, by the system via the one or more hardware processors, at least one PII data disclosure request in a PID owner wallet created for the user based on the determination, along with associated grant status indicating whether each of the one or more PII data disclosure requests is granted or denied .

The method further includes: enabling, by the system via the one or more hardware processors, the user to approve at least one PII data disclosure request fully or partially of the one or more PII data disclosure requests that are present in the PID owner's wallet; enabling, by the system via the one or more hardware processors, the user to provide an approval timeline for each PII data disclosure request of the at least one PII data disclosure request that is approved fully or partially by the user, wherein the approval timeline ensures that an access to at least one PII attribute of the PII data is denied after the approval timeline gets over, and wherein the at least one PII attribute is identified based on an approval provided by the user; enabling, by the system via the one or more hardware processors, the user to deny at least one PII data disclosure request fully or partially of the one or more PII data disclosure requests that are present in the PID owner wallet; and modifying, by the system via the one or more hardware processors, the series of bits of at least one access token stored in the tertiary blockchain ledger based on an approval or a denial provided by the user on the at least one PII data disclosure request, wherein the approval timeline, if provided by the user for any PII data disclosure request, is added in an access token generated for a respective peer-PII attribute combination, and wherein the peer-PII attribute combination is identified based on PII attributes for which access is requested in the PII data disclosure request.

The method further includes: retrieving, by the system via the one or more hardware processors, at least one access token that is linked to the service based on the one or more PII attributes and the peer who wants to access the service data, wherein at least one peer-PII attribute combination is created based on the one or more PII attributes and the peer, and wherein the at least one created peer-PII attribute combination is used to identify the at least one access token; identifying, by the system via the one or more hardware processors, at least one PII attribute to the service data based on the status of each bit in the series of the bits of the identified at least one access token; retrieving, by the system via the one or more hardware processors, the PII data associated with the service from the secondary blockchain ledger, wherein the PII data associated with the service is retrieved upon receiving a PII data disclosure request from a peer of the user who wants to access the service data, wherein the peer is present in the predefined PAL; identifying, by the system via the one or more hardware processors, which PII attribute of the PII Data corresponds to which bit in the series of bits of the identified at least one access token using the PII data ordering technique; decrypting, by the system via the one or more hardware processors, the retrieved PII data using a standard decryption algorithm to obtain a decrypted PII data, wherein the standard decryption algorithm uses the same key and the salt used for encrypting the segregated PII data to decrypt the retrieved PII data, wherein the decrypted PII data comprises one or more PII attributes; and reconstructing, by the system via the one or more hardware processors, the service data for the peer by implementing the data structure referencing principle on one or more referencing indexes of the regular data to populate the PII data in place of the one or more referencing indexes, wherein the real-time PII hash index registry is used for populating the PII data in place of the one or more referencing indexes.

The method further includes: receiving, by the system via the one or more hardware processors, a request to access at least one PII attribute from an outside peer, wherein the outside peer is not present in PAL; generating, by the system via the one or more hardware processors, an access token request for the at least one PII attribute using the PII data ordering technique, wherein the access token request is maintained in the PID owner wallet of the user, and wherein the user is enabled to approve or deny the access token request fully or partially; modifying, by the system via the one or more hardware processors, the access token request based on a user action; and granting, by the system via the one or more hardware processors, access to the outside peer to view the at least one PII attribute based on the modified access token.

The method further includes: deleting, upon receiving a PII data deletion request from the user, by the system via the one or more hardware processors, the key and the salt stored in the off-chain system, wherein the deletion of the key and the salt ensures permanent inaccessibility of PII data from the secondary blockchain ledger.

The method further includes selection of the PII 2D abstract data structure from a predefined set of PII 2D abstract data structures based on the service initiated by the user, wherein the PII 2D abstract data structure, when applied on the service data, segregates the regular data from the PII data, and wherein the segregated PII data comprises one or more PII attributes.

In another embodiment, a system is provided. The system includes a memory storing instructions, one or more communication interfaces, and one or more hardware processors coupled to the memory via the one or more communication interfaces. The one or more hardware processors are configured by the instructions to: receive a service data associated with a service initiated by a user, the service data comprising a regular data and a personal identifiable information (PII) data of the user; segregate the service data into the PII data and the regular data based on a PII two-dimensional (2D) abstract data structure; apply a deduplication algorithm on the segregated PII data, wherein the deduplication algorithm identifies at least one new PII attribute from the one or more PII attributes that is not present in a former PII hash index registry, wherein the former PII hash index registry is present in the system; create a real-time PII hash index registry for the one or more PII attributes using a data structure referencing principle, wherein the real-time PII hash index registry comprises a referencing index for each of the one or more PII attributes, wherein each referencing index comprises a PII indicator, an index value and an attribute name, wherein the created real-time PII hash index registry and regular data are stored in a primary blockchain ledger, and wherein the real-time PII hash index registry serves as a reference for pointing to an exact PII attribute of the PII data of the user; encrypt the segregated PII data using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system; create one or more peer-PII attribute combinations based, at least in part, on, one or more peer names defined in a predefined peer access list (PAL) and the one or more PII attributes; generate an access token for each pair of the peer-PII attribute combination of the one or more peer-PII attribute combinations using a PII data ordering technique, wherein the access token generated for each pair of the peer-PII attribute combination comprises a series of bits for a respective PII attribute, wherein a number of bits present in the series of bits is decided based on one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order; and store the access token generated for each pair of the peer-PII attribute combination in a tertiary blockchain ledger, wherein an access grant to the PII data of the user is decided based on stored access tokens thus enabling enhanced security to the PII data of the user.

The one or more hardware processors of the system are further configured to: receive one or more PII data disclosure requests from one or more peers of the user; determine whether each of the one or more PII data disclosure requests are granted; and store at least one PII data disclosure request in a PID owner wallet created for the user based on the determination, along with associated grant status indicating whether each of the one or more PII data disclosure requests is granted or denied .

The one or more hardware processors of the system are further configured to: enable the user to approve at least one PII data disclosure request fully or partially of the one or more PII data disclosure requests that are present in the PID owner's wallet; enable the user to provide an approval timeline for each PII data disclosure request of the at least one PII data disclosure request that is approved fully or partially by the user, wherein the approval timeline ensures that an access to at least one PII attribute of the PII data is denied after the approval timeline gets over, and wherein the at least one PII attribute is identified based on an approval provided by the user; enable the user to deny at least one PII data disclosure request fully or partially of the one or more PII data disclosure requests that are present in the PID owner wallet; and modify the series of bits of at least one access token stored in the tertiary blockchain ledger based on an approval or a denial provided by the user on the at least one PII data disclosure request, wherein the approval timeline, if provided by the user for any PII data disclosure request, is added in an access token generated for a respective peer-PII attribute combination, and wherein the peer-PII attribute combination is identified based on PII attributes for which access is requested in the PII data disclosure request.

The one or more hardware processors of the system are further configured to: retrieve at least one access token that is linked to the service based on the one or more PII attributes and the peer who wants to access the service data, wherein at least one peer-PII attribute combination is created based on the one or more PII attributes and the peer, and wherein the at least one created peer-PII attribute combination is used to identify the at least one access token; identify at least one PII attribute to the service data based on the status of each bit in the series of the bits of the identified at least one access token; retrieve the PII data associated with the service from the secondary blockchain ledger, wherein the PII data associated with the service is retrieved upon receiving a PII data disclosure request from a peer of the user who wants to access the service data, wherein the peer is present in the predefined PAL; identify which PII attribute of the PII Data corresponds to which bit in the series of bits of the identified at least one access token using the PII data ordering technique; decrypt the retrieved PII data using a standard decryption algorithm to obtain a decrypted PII data, wherein the standard decryption algorithm uses the same key and the salt used for encrypting the segregated PII data to decrypt the retrieved PII data, wherein the decrypted PII data comprises one or more PII attributes; and reconstruct the service data for the peer by implementing the data structure referencing principle on one or more referencing indexes of the regular data to populate the PII data in place of the one or more referencing indexes, wherein the real-time PII hash index registry is used for populating the PII data in place of the one or more referencing indexes.

The one or more hardware processors of the system are further configured to: receive a request to access at least one PII attribute from an outside peer, wherein the outside peer is not present in PAL; generate an access token request for the at least one PII attribute using the PII data ordering technique, wherein the access token request is maintained in the PID owner wallet of the user, and wherein the user is enabled to approve or deny the access token request fully or partially; modify the access token request based on a user action; and grant access to the outside peer to view the at least one PII attribute based on the modified access token.

The one or more hardware processors of the system are further configured to delete, upon receiving a PII data deletion request from the user the key and the salt stored in the off-chain system, wherein the deletion of the key and the salt ensures permanent inaccessibility of PII data from the secondary blockchain ledger.

The one or more hardware processors of the system are further configured to select the PII 2D abstract data structure from a predefined set of PII 2D abstract data structures based on the service initiated by the user, wherein the PII 2D abstract data structure, when applied on the service data, segregates the regular data from the PII data, and wherein the segregated PII data comprises one or more PII attributes.

In yet another aspect, there are provided one or more non-transitory machine-readable information storage mediums comprising one or more instructions which when executed by one or more hardware processors cause: receiving, by a system via one or more hardware processors, a service data associated with a service initiated by a user, the service data comprising a regular data and a personal identifiable information (PII) data of the user; segregating, by the system via the one or more hardware processors, the service data into the PII data and the regular data based on a PII two-dimensional (2D) abstract data structure; applying, by the system via the one or more hardware processors, a deduplication algorithm on the segregated PII data, wherein the deduplication algorithm identifies at least one new PII attribute from one or more PII attributes that is not present in a former PII hash index registry, wherein the former PII hash index registry is present in the system; creating, by the system via the one or more hardware processors, a real-time PII hash index registry for the one or more PII attributes using a data structure referencing principle, wherein the real-time PII hash index registry comprises a referencing index for each of the one or more PII attributes, wherein each referencing index comprises a PII indicator, an index value and an attribute name, wherein the created real-time PII hash index registry and regular data are stored in a primary blockchain ledger, and wherein the real-time PII hash index registry serves as a reference for pointing to an exact PII attribute of the PII data of the user; encrypting, by the system via the one or more hardware processors, the segregated PII data using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system; creating, by the system via the one or more hardware processors, one or more peer-PII attribute combinations based, at least in part, on, one or more peer names defined in a predefined peer access list (PAL) and the one or more PII attributes; generating, by the system via the one or more hardware processors, an access token for each pair of the peer-PII attribute combination of the one or more peer-PII attribute combinations using a PII data ordering technique, wherein the access token generated for each pair of the peer-PII attribute combination comprises a series of bits for a respective PII attribute, wherein a number of bits present in the series of bits is decided based on one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order; and storing, by the system via the one or more hardware processors, the access token generated for each pair of the peer-PII attribute combination in a tertiary blockchain ledger, wherein an access grant to the PII data of the user is decided based on stored access tokens thus enabling enhanced security to the PII data of the user.

The one or more hardware processors are configured by the non-transitory computer readable medium to: receive one or more PII data disclosure requests from one or more peers of the user; determine whether each of the one or more PII data disclosure requests are granted; and store at least one PII data disclosure request in a PID owner wallet created for the user based on the determination, along with associated grant status indicating whether each of the one or more PII data disclosure requests is granted or denied.

The one or more hardware processors are further configured by the non-transitory computer readable medium to: enable the user to approve at least one PII data disclosure request fully or partially of the one or more PII data disclosure requests that are present in the PID owner's wallet; enable the user to provide an approval timeline for each PII data disclosure request of the at least one PII data disclosure request that is approved fully or partially by the user, wherein the approval timeline ensures that an access to at least one PII attribute of the PII data is denied after the approval timeline gets over, and wherein the at least one PII attribute is identified based on an approval provided by the user; enable the user to deny at least one PII data disclosure request fully or partially of the one or more PII data disclosure requests that are present in the PID owner wallet; and modify the series of bits of at least one access token stored in the tertiary blockchain ledger based on an approval or a denial provided by the user on the at least one PII data disclosure request, wherein the approval timeline, if provided by the user for any PII data disclosure request, is added in an access token generated for a respective peer-PII attribute combination, and wherein the peer-PII attribute combination is identified based on PII attributes for which access is requested in the PII data disclosure request.

The one or more hardware processors are further configured by the non-transitory computer readable medium to: retrieve at least one access token that is linked to the service based on the one or more PII attributes and the peer who wants to access the service data, wherein at least one peer-PII attribute combination is created based on the one or more PII attributes and the peer, and wherein the at least one created peer-PII attribute combination is used to identify the at least one access token; identify at least one PII attribute to the service data based on the status of each bit in the series of the bits of the identified at least one access token; retrieve the PII data associated with the service from the secondary blockchain ledger, wherein the PII data associated with the service is retrieved upon receiving a PII data disclosure request from a peer of the user who wants to access the service data, wherein the peer is present in the predefined PAL; identify which PII attribute of the PII Data corresponds to which bit in the series of bits of the identified at least one access token using the PII data ordering technique; decrypt the retrieved PII data using a standard decryption algorithm to obtain a decrypted PII data, wherein the standard decryption algorithm uses the same key and the salt used for encrypting the segregated PII data to decrypt the retrieved PII data, wherein the decrypted PII data comprises one or more PII attributes; and reconstruct the service data for the peer by implementing the data structure referencing principle on one or more referencing indexes of the regular data to populate the PII data in place of the one or more referencing indexes, wherein the real-time PII hash index registry is used for populating the PII data in place of the one or more referencing indexes.

The one or more hardware processors are further configured by the non-transitory computer readable medium to: receive a request to access at least one PII attribute from an outside peer, wherein the outside peer is not present in PAL; generate an access token request for the at least one PII attribute using the PII data ordering technique, wherein the access token request is maintained in the PID owner wallet of the user, and wherein the user is enabled to approve or deny the access token request fully or partially; modify the access token request based on a user action; and grant access to the outside peer to view the at least one PII attribute based on the modified access token.

The one or more hardware processors are further configured by the non-transitory computer readable medium to: delete, upon receiving a PII data deletion request from the user the key and the salt stored in the off-chain system, wherein the deletion of the key and the salt ensures permanent inaccessibility of PII data from the secondary blockchain ledger.

The one or more hardware processors are further configured by the non-transitory computer readable medium to: select the PII 2D abstract data structure from a predefined set of PII 2D abstract data structures based on the service initiated by the user, wherein the PII 2D abstract data structure, when applied on the service data, segregates the regular data from the PII data, and wherein the segregated PII data comprises one or more PII attributes.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for securing personal identifiable information (PII) in blockchain according to some embodiments of the present disclosure.

FIGS. 2A, 2B, and 2C is a flow diagram depicting steps involved in the process of securing personal identifiable information (PII) in blockchain, using the system of FIG. 1, according to some embodiments of the present disclosure.

FIG. 3 is a flow diagram depicting steps involved in the process of recordation of a PII data disclosure request, by the system of FIG. 1, in accordance with some embodiments of the present disclosure.

FIG. 4 is a flow diagram depicting steps in the process of enabling a plurality of user actions associated with the process of recordation of a PII data disclosure request, by the system of FIG. 1, in accordance with some embodiments of the present disclosure.

FIGS. 5A and 5B is a flow diagram illustrating steps involved in the process of providing access to the PII data, in response to a data access request received from a peer, in accordance with some embodiments of the present disclosure.

FIG. 6 is a flow diagram illustrating steps involved in the process of providing access to the PII data, in response to a data access request received from an outside peer, in accordance with some embodiments of the present disclosure.

FIG. 7 depicts an example functional block diagram of the system of FIG. 1, in accordance with some embodiments of the present disclosure.

FIG. 8 depicts structure of a 2-Dimensional (2D) abstract PII data structure used for storing a received service data by the system of FIG. 1, in accordance with some embodiments of the present disclosure.

FIG. 9 depicts example of deduplication technique used by the system of FIG. 1, in accordance with some embodiments of the present disclosure.

FIG. 10 depicts example of PII ordering technique used by the system of FIG. 1, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Organizations use the concept of Personal Identifiable Information (PII) to understand which data they store, process and manage that identifies people and may carry additional responsibility, security requirements, and in some cases legal or compliance requirements. Current technology allows storage on PII data on blockchain, however the user will not be allowed to delete any data from blockchain because of data immutability. As a result, even if the user doesn't want the data to remain on the blockchain platform, there is no option to delete it.

In order to address these challenges, a method and system for securing personal identifiable data in blockchain is provided. In this method, initially a service data associated with a service initiated by a user is received, by a system via one or more hardware processors, wherein the service data comprising a regular data and a personal identifiable information (PII) data of the user. The service data is then segregated, by the system via the one or more hardware processors, into the PII data and the regular data based on a PII two-dimensional (2D) abstract data structure. Further, a deduplication algorithm is applied, by the system via the one or more hardware processors, on the segregated PII data, wherein the deduplication algorithm identifies at least one new PII attribute from one or more PII attributes that are not present in a former PII hash index registry, wherein the former PII hash index registry is present in the system. Further, a PII hash index registry for the one or more PII attributes is created using a data structure referencing principle creating, by the system via the one or more hardware processors, wherein the PII hash index registry comprises a referencing index for each of the one or more PII attributes, wherein each referencing index comprises a PII indicator, an index value and an attribute name, wherein the created PII hash index registry and regular data are stored in a primary blockchain ledger, and wherein the PII hash index registry serves as a reference for pointing to an exact **PII** attribute of the PII data of the user. Further, the segregated PII data is encrypted, by the system via the one or more hardware processors, using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system. Further, one or more peer-PII attribute combinations based, at least in part, on, one or more peer names defined in a predefined peer access list (PAL) and the one or more PII attributes, are created by the system via the one or more hardware processors. Further, an access token for each pair of the peer-PII attribute combination of the one or more peer-PII attribute combinations is generated, by the system via the one or more hardware processors, using a PII data ordering technique, wherein the access token generated for each pair of the peer-PII attribute combination comprises a series of bits for a respective PII attribute, wherein a number of bits present in the series of bits is decided based on one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order. Further, the access token generated for each pair of the peer-PII attribute combination is stored in a tertiary blockchain ledger, by the system via the one or more hardware processors, wherein an access grant to the PII data of the user is decided based on stored access tokens thus enabling enhanced security to the PII data of the user. This approach overcomes the aforementioned challenges by encrypting the PII data using Key and Salt. Even when data is persisted in immutable ledger, the data is secured by removing the Salt and Key for the particular PII data from an off-chain there by making the encrypted PII data irretrievable forever.

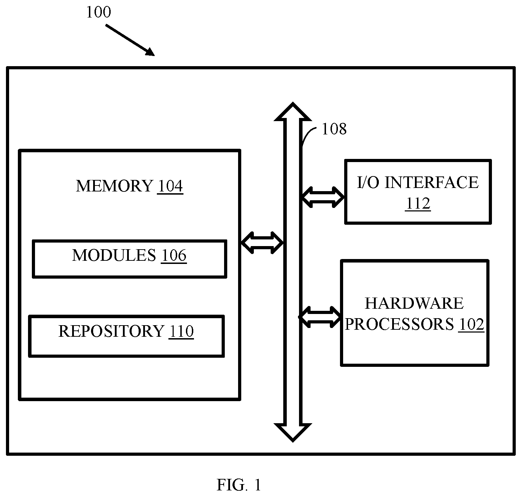

Referring now to the drawings, and more particularly to FIG. 1 through FIG. 10, where similar reference characters denote corresponding features consistently throughout the figures, there are shown preferred embodiments and these embodiments are described in the context of the following exemplary system and/or method.

FIG. 1 illustrates an exemplary system for securing personal identifiable information (PII) in blockchain according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of securing personal identifiable information (PII) in blockchain, being performed by the system of FIG. 1. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for securing personal identifiable information (PII) in blockchain.

The data repository (or repository) 110 may include a plurality of abstracted piece of data for refinement and data that is processed, received, or generated as a result of the execution of the plurality of modules in the module(s) 106.

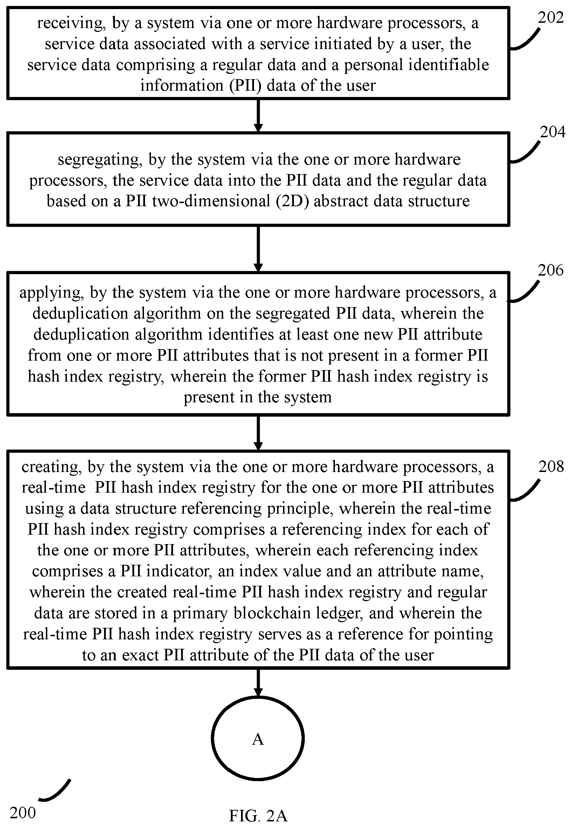

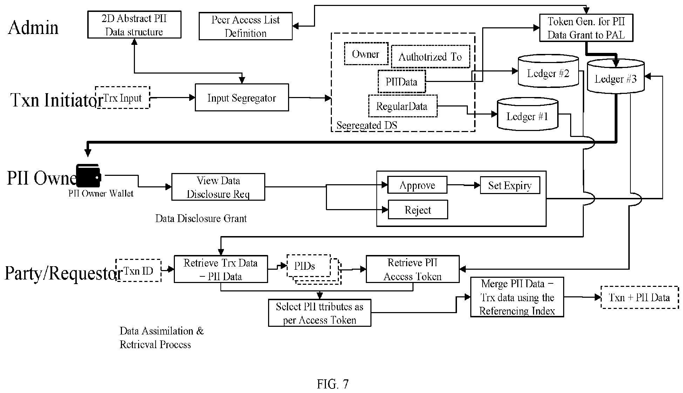

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagrams in FIG. 2A through FIG. 6, the example functional block diagram in FIG. 7, and the FIGS. 8, 9, and 10.

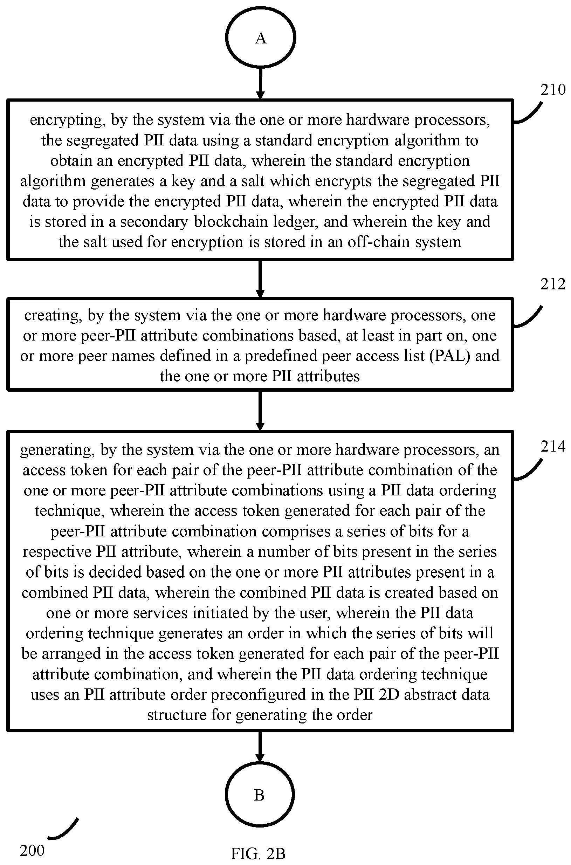

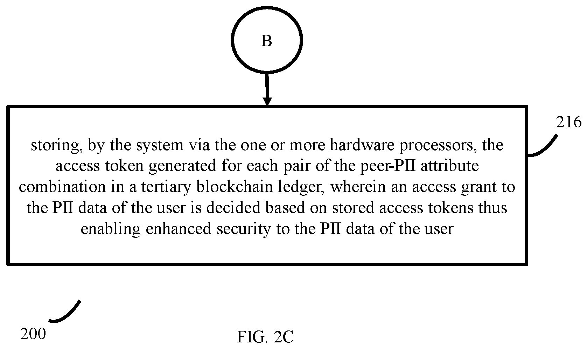

FIGS. 2A, 2B, and 2C is a flow diagram depicting steps involved in the process of securing personal identifiable information (PII) in blockchain, using the system of FIG. 1, according to some embodiments of the present disclosure.

In an embodiment, the system 100 comprises one or more data storage devices or the memory 104 operatively coupled to the processor(s) 102 and is configured to store instructions for execution of steps of a method 200 in FIGS. 2A, 2B, and 2C by the processor(s) or one or more hardware processors 102. The steps of the method 200 of the present disclosure will now be explained with reference to the components or blocks of the system 100 as depicted in FIG. 1, and the steps of flow diagram as depicted in FIGS. 2A, 2B, and 2C. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of the method 200, the system 100 receives, via the one or more hardware processors 102, a service data associated with a service initiated by a user. The service data includes a regular data and a personal identifiable information (PII) data of the user. The term "regular data" represents data that may not be sensitive in nature, and may not have to be safeguarded, whereas the "PII data" is sensitive data that contains information that needs to be secured. For example, data such as but not limited to name, mobile number, and email, are considered as PII data, which may be sensitive.

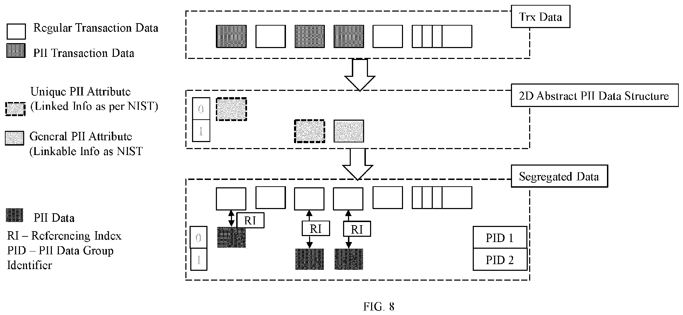

Further, at step 204 of the method 200, the system 100 segregates, via the one or more hardware processors 102, the service data into the PII data and the regular data based on a PII two-dimensional (2D) abstract data structure as depicted in FIG. 8. As depicted, the data structure identifies the different types of data in the service data, at specific locations in the data structure. For example, the regular data (alternately referred to as regular transaction data), the PII data (alternately referred to as PII transaction data), unique PII attribute, and general PII attribute. The unique PII attributes may be direct identifiers, which refers to information that can immediately identify an individual, such as full name, Social Security number, or passport number. The general PII attributes maybe indirect identifiers, which represent data that, when combined with other information, can lead to the identification of an individual, like date of birth, place of work, or job title. The data stored in the PII 2D data structure are referenced by a referencing Index (RI). The PII data maybe grouped, and each group may may be identified/represented by a PII Data Group Identifier (PID). The grouping is done based on the identification of unique PII data. For example, transaction 1 came with National ID, and transaction 2 came with Tax ID of an individual/user. When transaction 3 comes with both National ID and Tax ID, then system 100 identifies that PID created for transaction 1 and transaction 2 are same, therefore must be grouped and identified as PID 1.

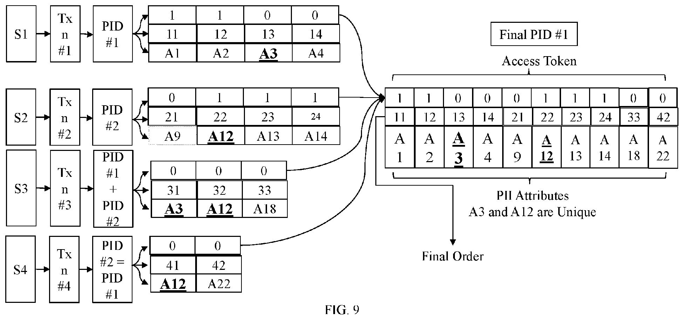

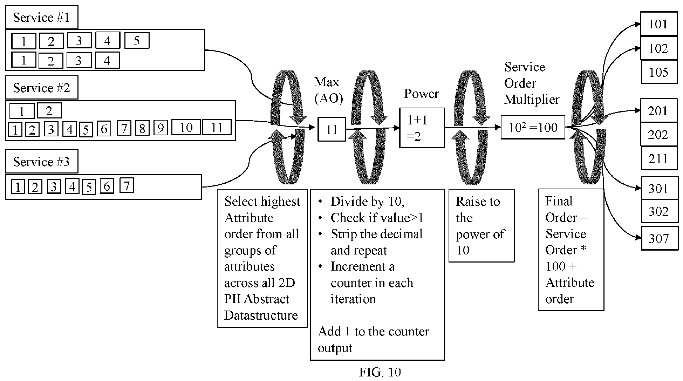

In an embodiment, the PII 2D abstract data structure is selected from a predefined set of PII 2D abstract data structures based on the service initiated by the user. The PII 2D abstract data structure, when applied on the service data, segregates the regular data from the PII data, and wherein the segregated PII data comprises one or more PII attributes. In an embodiment, the segregation of parts of the service data as the regular data, the PII data, the unique PII attribute, and the general PII attribute, may be done by an authorized admin, using appropriate user interface(s) provided. In another embodiment, the segregation maybe automated and may be done by the system 100. The system 100 may perform a deduplication before performing the segregation, so as to avoid repetition. The deduplication step may involve performing a data sanitization to trim out special characters, if present, from both end values. The deduplication step may further involve converting the PII attributes and values to lowercase and merging unique attributes to generate a hash. The deduplication technique is depicted in FIG. 9, and the PII data ordering technique is depicted in FIG. 10. Once segregated, the system 100 may store the regular data and the PII data in separate blockchain ledgers, for example, the regular data is stored in Blockchain ledger 1, and the PII data is stored in Blockchain ledger 2.

Further, at step 206 of the method 200, the system 100 applies, via the one or more hardware processors 102, a deduplication algorithm on the segregated PII data. The deduplication algorithm identifies at least one new PII attribute from of the one or more PII attributes that is not present in a former PII hash index registry that is present in the system. The PII hash index registry includes details on all the PII attributes that have been identified from the service data processed in the past. The deduplication algorithm compares the PII attributes in the service data with that in the PII hash index registry, and removes all duplicate entries. This way the unique PII attributes in the service data are identified.

Further, at step 208 of the method 200, the system 100 creates, via the one or more hardware processors 102, a real-time PII hash index registry for the one or more PII attributes using a data structure referencing principle. The real-time PII hash index registry comprises a referencing index for each of the one or more PII attributes. Each referencing index comprises a PII indicator, an index value, and an attribute name. The created real-time PII hash index registry and regular data are stored in a primary blockchain ledger, and wherein the PII hash index registry PII hash index registry serves as a reference for pointing to an exact PII attribute of the PII data of the user. The data structure referencing principle facilitates segregation of the PII data from the regular data, and uses a PII referencing identifier to link regular data with the PII data. The PII referencing identifier includes a $pii indicator indicating a PII value, an index or piiref representing the PII data set to be referred from in the input, and PII attributes under a PII dataset.

Further, at step 210, the system 100, via the one or more hardware processors, encrypts the segregated PII data using a standard encryption algorithm to obtain an encrypted PII data. The standard encryption algorithm generates a key and a salt which encrypts the segregated PII data to provide the encrypted PII data. The encrypted PII data is stored in a secondary blockchain ledger. The key and the salt used for encryption is stored in an off-chain system. This encryption secures the PII data within the ledger.

Further, at step 212 of the method 200, the system 100 creates, via the one or more hardware processors 102, one or more peer-PII attribute combinations based, at least in part, on, one or more peer names defined in a predefined peer access list (PAL) and the one or more PII attributes. Peer refers to a person who maybe identified as a party in the system 100, by the user. A user may identify one or more users as peers, and may accordingly grant full or partial access to selected data.

Further, at step 214 of the method 200, the system 100 generates, via the one or more hardware processors 102, an access token for each pair of the peer-PII attribute combination of the one or more peer-PII attribute combinations using a PII data ordering technique. The access token generated for each pair of the peer-PII attribute combination comprises a series of bits for a respective PII attribute, wherein a number of bits present in the series of bits is decided based on of the one or more PII attributes present in a combined PII data. The combined PII data is created based on one or more services initiated by the user, wherein the PII data ordering technique generates an order in which the series of bits are arranged in the access token generated for each pair of the peer-PII attribute combination. The PII data ordering technique uses a PII attribute order preconfigured in the PII 2D abstract data structure for generating the order.

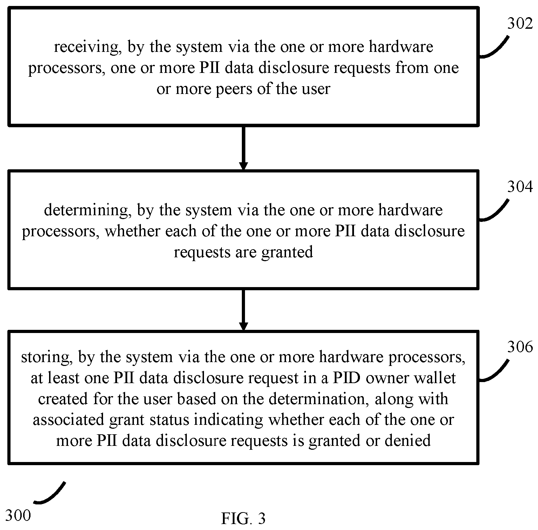

Further, at step 216 of the method 200, the system 100 stores, via the one or more hardware processors 102, the access token generated for each pair of the peer-PII attribute combination in a tertiary blockchain ledger. Whenever an access request to the PII data is received, access grant to the PII data of the user is decided based on stored access tokens thus enabling enhanced security to the PII data of the user. This is further depicted in method 300 in FIG. 3.

At step 302 of the method 300, the system 100 receives one or more PII data disclosure requests from one or more peers of the user. Further, at step 304 of the method 300, the system 100 determines, via the one or more hardware processors 102, whether each of the one or more PII data disclosure requests is granted. Further, at step 306 of the method 300, the system 100 stores, via the one or more hardware processors 102, at least one PII data disclosure request in a PID owner wallet created for the user based on the determination, along with associated grant status indicating whether each of the one or more PII data disclosure requests is granted or denied.

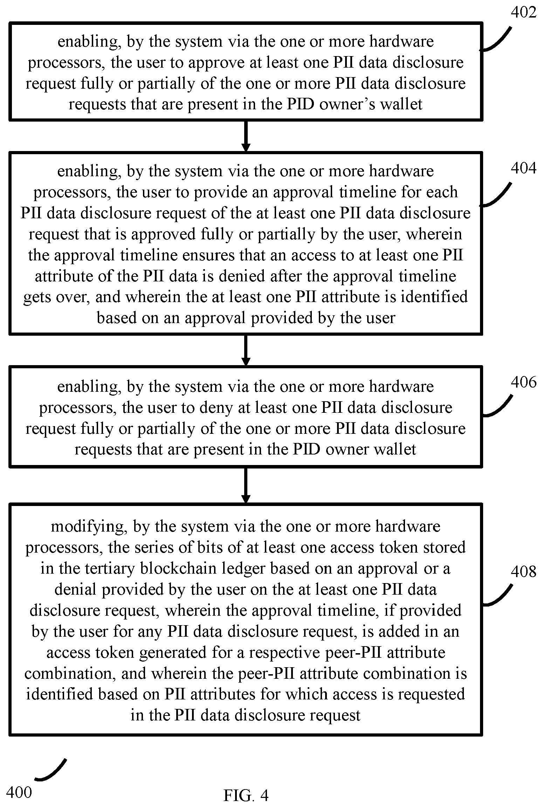

The system 100 enables the users to perform a variety of functions, as listed in method 400 in FIG. 4. As in step 402, the system 100 enables the user to approve at least one PII data disclosure request of the one or more PII data disclosure requests that are present in the PID owner's wallet, fully or partially. A PII owner can approve partial data access means only a certain PII attributes can be viewed by the requestor/peer, whereas, the is full access is granted, then the requestor is provided access to all the PII attributes. As in step 404, the system 100 enables the user to provide an approval timeline for each PII data disclosure request of the at least one PII data disclosure request that is approved fully or partially by the user. The approval timeline ensures that an access to at least one PII attribute of the PII data is denied after the approval timeline gets over, and wherein the at least one PII attribute is identified based on an approval provided by the user. As in step 406, the system 100 enables the user to deny at least one PII data disclosure request of the one or more PII data disclosure requests that are present in the PID owner wallet, fully or partially. At step 408, the system 100, via the one or more hardware processors 102, a series of bits of at least one access token stored in the tertiary blockchain ledger based on an approval or a denial provided by the user on the at least one PII data disclosure request, wherein the approval timeline, if provided by the user for any PII data disclosure request, is added in an access token generated for a respective peer-PII attribute combination, and wherein the peer-PII attribute combination is identified based on PII attributes for which access is requested in the PII data disclosure request.

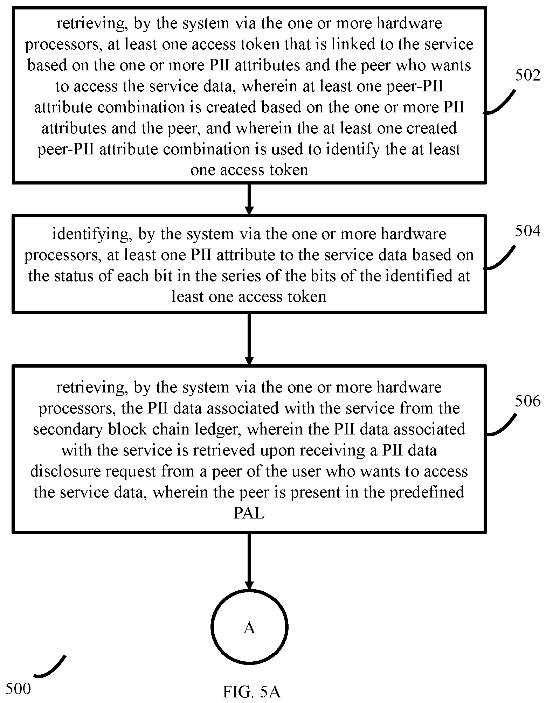

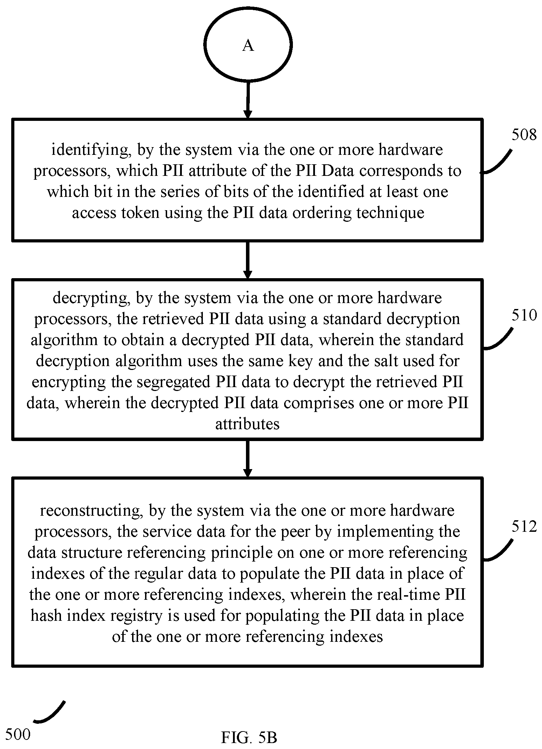

Various steps involved in the process of providing restricted access to a peer are depicted in method 500 in FIGS. 5A and 5B, and are explained hereafter. At step 502 of the method 500, the system 100 retrieves, via the one or more hardware processors 102, at least one access token that is linked to the service, based on the one or more PII attributes and the peer who wants to access the service data. At least one peer-PII attribute combination is created based on the one or more PII attributes and the peer, and wherein the at least one created peer-PII attribute combination is used to identify the at least one access token. Further, at step 504 of the method 500, the system 100 identifies, via the one or more hardware processors 102, at least one PII attribute to the service data based on the status of each bit in the series of the bits of the identified at least one access token.

Further, at step 506 of the method 500, the system 100 retrieves, via the one or more hardware processors 102, the PII data associated with the service from a secondary blockchain ledger, upon receiving a PII data disclosure request from the peer of the user who wants to access the service data. In an embodiment, the peer is listed in the PAL, so that the access is given. Further, at step 508 of the method 500, the system 100 identifies, via the one or more hardware processors 102, which PII attribute of the decrypted PII Data corresponds to which bit in the series of bits of the identified at least one access token, using the PII data ordering technique. The PII data ordering technique is schematically represented in FIG. 10, and is explained hereafter.

In the PII data ordering technique, the system 100 initially determines value of a maximum attribute order. For example, in FIG. 11, there are 3 different services. Among them, service 2 has maximum order, i.e., 11, hence this value is used as the maximum attribute order. Further, the maximum attribute order value is divided by 10, and the system check is a resultant value is greater than 1. If yes, then the system 100 strips out decimal portion of the obtained value, and repeats the division by 10, till the resultant value is less than 1. The system 100 keeps a count of number of iterations it took to get the resultant value that is below 1. To this value, the system 100 adds a value 1, and then raises the power by 10, to obtain value of a service order multiplier.

Now, the system 100 obtains value of a final order as:

$$\text{Final order} = \text{Service order} * 100 + \text{Attribute order}$$

Based on value of the final order, the system 100 then performs the PII data ordering. This is depicted in right side of the illustration in FIG. 10.

The system 100 also performs the deduplication as depicted in FIG. 9. In the deduplication process, the system 100 identifies the PII attributes that are repeated across different transactions are identified. While generating the final PID, the system 100 uses the repeated attributes only once, as in FIG. 9.

Further, at step 510 of the method 500, the system 100 decrypts, via the one or more hardware processors 102, the retrieved PII data using a standard decryption algorithm, for example, Advanced Encryption Standard (AES) algorithm, to obtain a decrypted PII data. The standard decryption algorithm uses the same key and the salt used for encrypting the segregated PII data to decrypt the retrieved PII data. The decrypted PII data comprises one or more PII attributes.

Further, at step 512 of the method 500, the system 100 reconstructs, via the one or more hardware processors 102, the service data for the peer by implementing the data structure referencing principle on one or more referencing indexes of the regular data to populate the PII data in place of the one or more referencing indexes. At this stage, using the real-time PII hash index registry, the system 100 populates the PII data in place of the one or more referencing indexes.

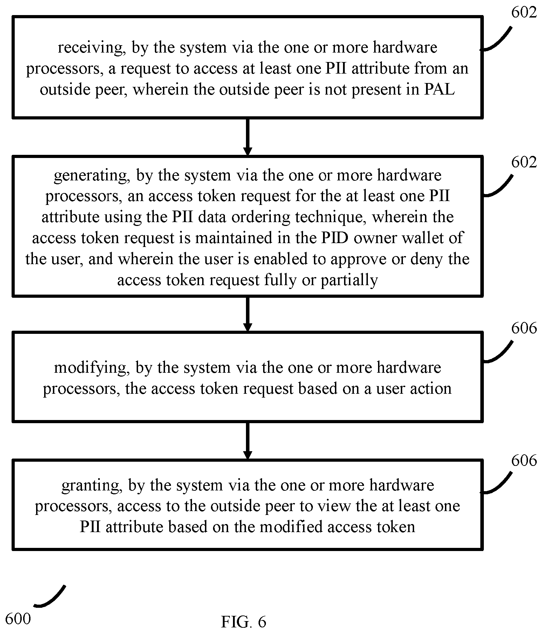

In some instances, the system 100 may have to handle data access requests from peers who have no prior access given. Various steps involved in this approach are depicted in method 600 in FIG. 6, and are explained hereafter. At step 602 of the method 600, the system 100 receives, via the one or more hardware processors 102, a request to access at least one PII attribute from an outside peer, wherein the outside peer is a person who is not present in the PAL, i.e., having no prior access given. Further, at step 604 of the method 600, the system 100 generates, via the one or more hardware processors 102, an access token request for the at least one PII attribute using the PII data ordering technique. The access token request is maintained in the PID owner wallet of the user, and wherein the user is enabled to approve or deny the access token request fully or partially. Further, at step 606 of the method 600, the system 100 modifies, via the one or more hardware processors 102, the access token request based on a user action, wherein the user action may be fully or partially approving or denying the access request. Further, at step 608 of the method 600, the system 100 grants, via the one or more hardware processors 102, access to the outside peer to view the at least one PII attribute based on the modified access token.

If the user doesn't want to keep the PII data in the blockchain anymore, then a PII data deletion request is to be given by the user to the system 100. Upon receiving this PII data deletion request, the system 100 deletes, via the one or more hardware processors 102, the key and the salt stored in the off-chain system, thereby ensuring permanent inaccessibility of the PII data from the secondary blockchain ledger.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of data staying on blockchain even if not needed anymore. The embodiment, thus provides an approach wherein the Personal Identifiable Information (PII) stored in immutable ledgers of a blockchain are secured by encrypting the PII data using Key and Salt. Moreover, the embodiments herein further supports right to forget even when data is persisted in immutable ledger by removing the Salt and Key for the particular PII data from the off-chain there by making the encrypted PII data irretrievable forever.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

   receiving (202), by a system via one or more hardware processors, a service data associated with a service initiated by a user, the service data comprising a regular data and a personal identifiable information (PII) data of the user;

   segregating (204), by the system via the one or more hardware processors, the service data into the PII data and the regular data based on a PII two-dimensional (2D) abstract data structure;

   applying (206), by the system via the one or more hardware processors, a deduplication algorithm on the segregated PII data, wherein the deduplication algorithm identifies at least one new PII attribute from one or more PII attributes that is not present in a former PII hash index registry, wherein the former PII hash index registry is present in the system;

   creating (208), by the system via the one or more hardware processors, a real-time PII hash index registry for the one or more PII attributes using a data structure referencing principle, wherein the real-time PII hash index registry comprises a referencing index for each of the one or more PII attributes, wherein each referencing index comprises a PII indicator, an index value and an attribute name, wherein the created real-time PII hash index registry and regular data are stored in a primary blockchain ledger, and wherein the real-time PII hash index registry serves as a reference for pointing to an exact PII attribute of the PII data of the user;

   encrypting (210), by the system via the one or more hardware processors, the segregated PII data using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system;

   creating (212), by the system via the one or more hardware processors, one or more peer-PII attribute combinations based, at least in part, on, one or more peer names defined in a predefined peer access list (PAL) and the one or more PII attributes;

   generating (214), by the system via the one or more hardware processors, an access token for each pair of the peer-PII attribute combination of the one or more peer-PII attribute combinations using a PII data ordering technique, wherein the access token generated for each pair of the peer-PII attribute combination comprises a series of bits for a respective PII attribute, wherein a number of bits present in the series of bits is decided based on the one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order; and

   storing (216), by the system via the one or more hardware processors, the access token generated for each pair of the peer-PII attribute combination in a tertiary blockchain ledger, wherein an access grant to the PII data of the user is decided based on stored access tokens thus enabling enhanced security to the PII data of the user.

2. The processor implemented method (200) as claimed in claim 1, comprising:

   receiving (302), by the system via the one or more hardware processors, one or more PII data disclosure requests from one or more peers of the user;

   determining (304), by the system via the one or more hardware processors, whether each of the one or more PII data disclosure requests are granted; and

   storing (306), by the system via the one or more hardware processors, at least one PII data disclosure request in a PID owner wallet created for the user based on the determination, along with associated grant status indicating whether each of the one or more PII data disclosure requests is granted or denied.

3. The processor implemented method (300) as claimed in claim 2, comprising:

   enabling (402), by the system via the one or more hardware processors, the user to approve at least one PII data disclosure request fully or partially of the one or more PII data disclosure requests that are present in the PID owner's wallet;

   enabling (404), by the system via the one or more hardware processors, the user to provide an approval timeline for each PII data disclosure request of the at least one PII data disclosure request that is approved fully or partially by the user, wherein the approval timeline ensures that an access to at least one PII attribute of the PII data is denied after the approval timeline gets over, and wherein the at least one PII attribute is identified based on an approval provided by the user;

enabling (406), by the system via the one or more hardware processors, the user to deny at least one PII data disclosure request fully or partially of the one or more PII data disclosure requests that are present in the PID owner wallet; and

modifying (408), by the system via the one or more hardware processors, the series of bits of at least one access token stored in the tertiary blockchain ledger based on an approval or a denial provided by the user on the at least one PII data disclosure request, wherein the approval timeline, if provided by the user for any PII data disclosure request, is added in an access token generated for a respective peer-PII attribute combination, and wherein the peer-PII attribute combination is identified based on PII attributes for which access is requested in the PII data disclosure request.

4. The processor implemented method (300) as claimed in claim 1, comprising:

retrieving (502), by the system via the one or more hardware processors, at least one access token that is linked to the service based on the one or more PII attributes and the peer who wants to access the service data, wherein at least one peer-PII attribute combination is created based on the one or more PII attributes and the peer, and wherein the at least one created peer-PII attribute combination is used to identify the at least one access token;

identifying (504), by the system via the one or more hardware processors, at least one PII attribute to the service data based on the status of each bit in the series of the bits of the identified at least one access token;

retrieving (506), by the system via the one or more hardware processors, the PII data associated with the service from the secondary blockchain ledger, wherein the PII data associated with the service is retrieved upon receiving a PII data disclosure request from a peer of the user who wants to access the service data, wherein the peer is present in the predefined PAL;

identifying (508), by the system via the one or more hardware processors, which PII attribute of the PII Data corresponds to which bit in the series of bits of the identified at least one access token using the PII data ordering technique;

decrypting (510), by the system via the one or more hardware processors, the retrieved PII data using a standard decryption algorithm to obtain a decrypted PII data, wherein the standard decryption algorithm uses the same key and the salt used for encrypting the segregated PII data to decrypt the retrieved PII data, wherein the decrypted PII data comprises one or more PII attributes; and reconstructing (512), by the system via the one or more hardware processors, the service data for the peer by implementing the data structure referencing principle on one or more referencing indexes of the regular data to populate the PII data in place of the one or more referencing indexes, wherein the real-time PII hash index registry is used for populating the PII data in place of the one or more referencing indexes.

5. The processor implemented method (300) as claimed in claim 1, comprising:

receiving (602), by the system via the one or more hardware processors, a request to access at least one PII attribute from an outside peer, wherein the outside peer is not present in PAL;

generating (604), by the system via the one or more hardware processors, an access token request for the at least one PII attribute using the PII data ordering technique, wherein the access token request is maintained in the PID owner wallet of the user, and wherein the user is enabled to approve or deny the access token request fully or partially;

modifying (606), by the system via the one or more hardware processors, the access token request based on a user action; and

granting (608), by the system via the one or more hardware processors, access to the outside peer to view the at least one PII attribute based on the modified access token.

6. The processor implemented method (300) as claimed in claim 1, comprising:
deleting, upon receiving a PII data deletion request from the user, by the system via the one or more hardware processors, the key and the salt stored in the off-chain system, wherein the deletion of the key and the salt ensures permanent inaccessibility of PII data from the secondary blockchain ledger.

7. The processor implemented method as claimed in claim 1, wherein the PII 2D abstract data structure is selected from a predefined set of PII 2D abstract data structures based on the service initiated by the user, wherein the PII 2D abstract data structure, when applied on the service data, segregates the regular data from the PII data, and wherein the segregated PII data comprises one or more PII attributes.

8. A system (102), comprising:

a memory (202) storing instructions;
one or more communication interfaces (206); and
one or more hardware processors (204) coupled to the memory (202) via the one or more communication interfaces (206), wherein the one or more hardware processors (204) are configured by the instructions to:

receive a service data associated with a service initiated by a user, the service data comprising a regular data and a personal identifiable information (PII) data of the user;
segregate the service data into the PII data and the regular data based on a PII two-dimensional (2D) abstract data structure;
apply a deduplication algorithm on the segregated PII data, wherein the deduplication algorithm identifies at least one new PII attribute from one or more PII attributes that is not present in a former PII hash index registry, wherein the former PII hash index registry is present in the system;
create a real-time PII hash index registry for the one or more PII attributes using a data structure referencing principle, wherein the real-time PII hash index registry comprises a referencing index for each of the one or more PII attributes, wherein each referencing index comprises a PII indicator, an index value and an attribute name, wherein the created real-time PII hash index registry and regular data are stored in a primary blockchain ledger, and wherein the real-time PII hash index registry serves as a reference for pointing to an exact PII attribute of the PII data of the user;
encrypt the segregated PII data using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system;
create one or more peer-PII attribute combinations based, at least in part, on, one or more peer names defined in a predefined peer access list (PAL) and the one or more PII attributes;
generate an access token for each pair of the peer-PII attribute combination of the one or more peer-PII attribute combinations using a PII data ordering technique, wherein the access token generated for each pair of the peer-PII attribute combination comprises a series of bits for a respective PII attribute, wherein a number of bits present in the series of bits is decided based on the one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order; and
store the access token generated for each pair of the peer-PII attribute combination in a tertiary blockchain ledger, wherein an access grant to the PII data of the user is decided based on stored access tokens thus enabling enhanced security to the PII data of the user.

9. The system (102) as claimed in claim 8, wherein the one or more hardware processors are configured to:

receive one or more PII data disclosure requests from one or more peers of the user;
determine whether each of the one or more PII data disclosure requests are granted; and
store at least one PII data disclosure request in a PID owner wallet created for the user based on the determination, wherein the at least one PII data disclosure request that is denied is stored in the PID owner wallet.

10. The system (102) as claimed in claim 9, wherein the one or more hardware processors are configured to:

enable the user to approve at least one PII data disclosure request fully or partially of the one or more PII data disclosure requests that are present in the PID owner's wallet;
enable the user to provide an approval timeline for each PII data disclosure request of the at least one PII data disclosure request that is approved fully or partially by the user, wherein the approval timeline ensures that an access to at least one PII attribute of the PII data is denied after the approval timeline gets over, and wherein the at least one PII attribute is identified based on an approval provided by the user;
enable the user to deny at least one PII data disclosure request fully or partially of the one or more PII data disclosure requests that are present in the PID owner wallet; and
modify the series of bits of at least one access token stored in the tertiary blockchain ledger based on an approval or a denial provided by the user on the at least one PII data disclosure request, wherein the approval timeline, if provided by the user for any PII data disclosure request, is added in an access token generated for a respective peer-PII attribute combination, and wherein the peer-PII attribute combination is identified based on PII attributes for which access is requested in the PII data disclosure request.

11. The system (102) as claimed in claim 8, wherein the one or more hardware processors are configured to:

retrieve at least one access token that is linked to the service based on the one or more PII attributes and the peer who wants to access the service data, wherein at least one peer-PII attribute combination is created based on the one or more PII attributes and the peer, and wherein the at least one created peer-PII attribute combination is used to identify the at least one access token;
identify at least one PII attribute to the service data based on the status of each bit in the series of the bits of the identified at least one access token;
retrieve the PII data associated with the service from the secondary blockchain ledger, wherein the PII data associated with the service is retrieved upon receiving a PII data disclosure request from a peer of the user who wants to access the service data, wherein the peer is present in the predefined PAL;
identify which PII attribute of the PII Data corresponds to which bit in the series of bits of the identified at least one access token using the PII data ordering technique;
decrypt the retrieved PII data using a standard decryption algorithm to obtain a decrypted PII data, wherein the standard decryption algorithm uses the same key and the salt used for encrypting the segregated PII data to decrypt the retrieved PII data, wherein the decrypted PII data comprises one or more PII attributes; and
reconstruct the service data for the peer by implementing the data structure referencing principle on one or more referencing indexes of the regular data to populate the PII data in place of the one or more referencing indexes, wherein the real-time PII hash index registry is used for populating the PII data in place of the one or more referencing indexes.

12. The system (102) as claimed in claim 8, wherein the one or more hardware processors are configured to:

receive a request to access at least one PII attribute from an outside peer, wherein the outside peer is not present in PAL;
generate an access token request for the at least one PII attribute using the PII data ordering technique, wherein the access token request is maintained in the PID owner wallet of the user, and wherein the user is enabled to approve or deny the access token request fully or partially;
modify the access token request based on a user action; and
grant access to the outside peer to view the at least one PII attribute based on the modified access token.

13. The system (102) as claimed in claim 8, wherein the one or more hardware processors are configured to:
delete, upon receiving a PII data deletion request from the user the key and the salt stored in the off-chain system, wherein the deletion of the key and the salt ensures permanent inaccessibility of PII data from the secondary blockchain ledger.

14. The system (102) as claimed in claim 8, wherein the one or more hardware processors are configured to select the PII 2D abstract data structure from a predefined set of PII 2D abstract data structures based on the service initiated by the user, wherein the PII 2D abstract data structure, when applied on the service data, segregates the regular data from the PII data, and wherein the segregated PII data comprises one or more PII attributes.

15. One or more non-transitory machine-readable information storage mediums
comprising one or more instructions which when executed by one or more hardware processors cause:

receiving by a system, a service data associated with a service initiated by a user, the service data comprising a regular data and a personal identifiable information (PII) data of the user;
segregating by the system, the service data into the PII data and the regular data based on a PII two-dimensional (2D) abstract data structure;
applying by the system, a deduplication algorithm on the segregated PII data, wherein the deduplication algorithm identifies at least one new PII attribute from one or more PII attributes that is not present in a former PII hash index registry, wherein the former PII hash index registry is present in the system;
creating by the system, a real-time PII hash index registry for the one or more PII attributes using a data structure referencing principle, wherein the real-time PII hash index registry comprises a referencing index for each of the one or more PII attributes, wherein each referencing index comprises a PII indicator, an index value and an attribute name, wherein the created real-time PII hash index registry and regular data are stored in a primary blockchain ledger, and wherein the real-time PII hash index registry serves as a reference for pointing to an exact PII attribute of the PII data of the user;

encrypting by the system, the segregated PII data using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system;

creating by the system, one or more peer-PII attribute combinations based, at least in part, on, one or more peer names defined in a predefined peer access list (PAL) and the one or more PII attributes;

generating by the system, an access token for each pair of the peer-PII attribute combination of the one or more peer-PII attribute combinations using a PII data ordering technique, wherein the access token generated for each pair of the peer-PII attribute combination comprises a series of bits for a respective PII attribute, wherein a number of bits present in the series of bits is decided based on the one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order; and

storing by the system, the access token generated for each pair of the peer-PII attribute combination in a tertiary blockchain ledger, wherein an access grant to the PII data of the user is decided based on stored access tokens thus enabling enhanced security to the PII data of the user.

100

MEMORY 104

MODULES 106

REPOSITORY 110

108

I/O INTERFACE 112

HARDWARE PROCESSORS 102

FIG. 1

receiving, by a system via one or more hardware processors, a service data associated with a service initiated by a user, the service data comprising a regular data and a personal identifiable information (PII) data of the user — 202

segregating, by the system via the one or more hardware processors, the service data into the PII data and the regular data based on a PII two-dimensional (2D) abstract data structure — 204

applying, by the system via the one or more hardware processors, a deduplication algorithm on the segregated PII data, wherein the deduplication algorithm identifies at least one new PII attribute from one or more PII attributes that is not present in a former PII hash index registry, wherein the former PII hash index registry is present in the system — 206

creating, by the system via the one or more hardware processors, a real-time PII hash index registry for the one or more PII attributes using a data structure referencing principle, wherein the real-time PII hash index registry comprises a referencing index for each of the one or more PII attributes, wherein each referencing index comprises a PII indicator, an index value and an attribute name, wherein the created real-time PII hash index registry and regular data are stored in a primary blockchain ledger, and wherein the real-time PII hash index registry serves as a reference for pointing to an exact PII attribute of the PII data of the user — 208

A

200

FIG. 2A

A

encrypting, by the system via the one or more hardware processors, the segregated PII data using a standard encryption algorithm to obtain an encrypted PII data, wherein the standard encryption algorithm generates a key and a salt which encrypts the segregated PII data to provide the encrypted PII data, wherein the encrypted PII data is stored in a secondary blockchain ledger, and wherein the key and the salt used for encryption is stored in an off-chain system

210

creating, by the system via the one or more hardware processors, one or more peer-PII attribute combinations based, at least in part on, one or more peer names defined in a predefined peer access list (PAL) and the one or more PII attributes

212

generating, by the system via the one or more hardware processors, an access token for each pair of the peer-PII attribute combination of the one or more peer-PII attribute combinations using a PII data ordering technique, wherein the access token generated for each pair of the peer-PII attribute combination comprises a series of bits for a respective PII attribute, wherein a number of bits present in the series of bits is decided based on the one or more PII attributes present in a combined PII data, wherein the combined PII data is created based on one or more services initiated by the user, wherein the PII data ordering technique generates an order in which the series of bits will be arranged in the access token generated for each pair of the peer-PII attribute combination, and wherein the PII data ordering technique uses an PII attribute order preconfigured in the PII 2D abstract data structure for generating the order

214

B

200

FIG. 2B

B

storing, by the system via the one or more hardware processors, the
access token generated for each pair of the peer-PII attribute
combination in a tertiary blockchain ledger, wherein an access grant to
the PII data of the user is decided based on stored access tokens thus
enabling enhanced security to the PII data of the user

216

200

FIG. 2C

receiving, by the system via the one or more hardware processors, one or more PII data disclosure requests from one or more peers of the user

302

determining, by the system via the one or more hardware processors, whether each of the one or more PII data disclosure requests are granted

304

storing, by the system via the one or more hardware processors, at least one PII data disclosure request in a PID owner wallet created for the user based on the determination, along with associated grant status indicating whether each of the one or more PII data disclosure requests is granted or denied

306

300

FIG. 3

enabling, by the system via the one or more hardware processors, the user to approve at least one PII data disclosure request fully or partially of the one or more PII data disclosure requests that are present in the PID owner's wallet

402

enabling, by the system via the one or more hardware processors, the user to provide an approval timeline for each PII data disclosure request of the at least one PII data disclosure request that is approved fully or partially by the user, wherein the approval timeline ensures that an access to at least one PII attribute of the PII data is denied after the approval timeline gets over, and wherein the at least one PII attribute is identified based on an approval provided by the user

404

enabling, by the system via the one or more hardware processors, the user to deny at least one PII data disclosure request fully or partially of the one or more PII data disclosure requests that are present in the PID owner wallet

406

modifying, by the system via the one or more hardware processors, the series of bits of at least one access token stored in the tertiary blockchain ledger based on an approval or a denial provided by the user on the at least one PII data disclosure request, wherein the approval timeline, if provided by the user for any PII data disclosure request, is added in an access token generated for a respective peer-PII attribute combination, and wherein the peer-PII attribute combination is identified based on PII attributes for which access is requested in the PII data disclosure request

408

400

FIG. 4

retrieving, by the system via the one or more hardware processors, at least one access token that is linked to the service based on the one or more PII attributes and the peer who wants to access the service data, wherein at least one peer-PII attribute combination is created based on the one or more PII attributes and the peer, and wherein the at least one created peer-PII attribute combination is used to identify the at least one access token

502

identifying, by the system via the one or more hardware processors, at least one PII attribute to the service data based on the status of each bit in the series of the bits of the identified at least one access token

504

retrieving, by the system via the one or more hardware processors, the PII data associated with the service from the secondary block chain ledger, wherein the PII data associated with the service is retrieved upon receiving a PII data disclosure request from a peer of the user who wants to access the service data, wherein the peer is present in the predefined PAL

506

A

500

FIG. 5A

A

identifying, by the system via the one or more hardware processors, which PII attribute of the PII Data corresponds to which bit in the series of bits of the identified at least one access token using the PII data ordering technique

508

decrypting, by the system via the one or more hardware processors, the retrieved PII data using a standard decryption algorithm to obtain a decrypted PII data, wherein the standard decryption algorithm uses the same key and the salt used for encrypting the segregated PII data to decrypt the retrieved PII data, wherein the decrypted PII data comprises one or more PII attributes

510

reconstructing, by the system via the one or more hardware processors, the service data for the peer by implementing the data structure referencing principle on one or more referencing indexes of the regular data to populate the PII data in place of the one or more referencing indexes, wherein the real-time PII hash index registry is used for populating the PII data in place of the one or more referencing indexes

512

500

FIG. 5B

602

receiving, by the system via the one or more hardware processors, a request to access at least one PII attribute from an outside peer, wherein the outside peer is not present in PAL

602

generating, by the system via the one or more hardware processors, an access token request for the at least one PII attribute using the PII data ordering technique, wherein the access token request is maintained in the PID owner wallet of the user, and wherein the user is enabled to approve or deny the access token request fully or partially

606

modifying, by the system via the one or more hardware processors, the access token request based on a user action

606

granting, by the system via the one or more hardware processors, access to the outside peer to view the at least one PII attribute based on the modified access token

600

FIG. 6

Admin

| 2D Abstract PII Data structure | Peer Access List Definition | | Token Gen. for PII Data Grant to PAL |

Owner | Authorized To

PIIData

Ledger #2 | Ledger #3

Txn Initiator Trx Input → Input Segregator

RegularData

Ledger #1

Segregated DS

PII Owner

PII Owner Wallet → View Data Disclosure Req → Approve → Set Expiry

Reject

Data Disclosure Grant

Party/Requestor Txn ID → Retrieve Trx Data – PII Data → PIDs → Retrieve PII Access Token → Merge PII Data – Trx data using the Referencing Index → Txn + PII Data

Select PII ttributes as per Access Token

Data Assimilation & Retrieval Process

FIG. 7

Regular Transaction Data

PII Transaction Data

Unique PII Attribute
(Linked Info as per NIST)

General PII Attribute
(Linkable Info as NIST

PII Data
RI – Referencing Index
PID – PII Data Group
Identifier

Trx Data

2D Abstract PII Data Structure

Segregated Data

RI    RI    RI

PID 1
PID 2

FIG. 8

FIG. 9

Service #1

| 1 | 2 | 3 | 4 | 5 |
| 1 | 2 | 3 | 4 |

Service #2

| 1 | 2 |
| 1 | 2 | 3 | 4 | 5 | 6 | 7 | 8 | 9 | 10 | 11 |

Service #3

| 1 | 2 | 3 | 4 | 5 | 6 | 7 |

Max (AO)

11

Power

$1+1$
$=2$

Service Order Multiplier

$10^2 = 100$

| 101 |
| 102 |
| 105 |

| 201 |
| 202 |
| 211 |

| 301 |
| 302 |
| 307 |

Select highest Attribute order from all groups of attributes across all 2D PII Abstract Datastructure

- Divide by 10,
- Check if value>1
- Strip the decimal and repeat
- Increment a counter in each iteration

Add 1 to the counter output

Raise to the power of 10

Final Order = Service Order * 100 + Attribute order

FIG. 10

Europäisches
Patentamt

European
Patent Office

Office européen
des brevets

# EUROPEAN SEARCH REPORT

**Application Number**

EP 25 20 2914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/320039 A1 (MANNINGHAM JASON [US] ET AL) 8 October 2020 (2020-10-08) * abstract * * paragraphs [0001] - [0002] * * paragraphs [0026] - [0103] * ----- | 1-15 | INV. H04L9/00 |
| A | US 2021/271778 A1 (WILSON KELCE S [US] ET AL) 2 September 2021 (2021-09-02) * abstract * * paragraphs [0037] - [0182] * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 19 February 2026 | Di Felice, M |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons
..................................................................................
& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

EP 25 20 2914

This annex lists the patent family members relating to the patent documents cited in  the above-mentioned European search report.
The members are as contained in the European Patent Office EDP file on
The European Patent Office is in no way liable for these particulars which are merely given for the purpose of information.

19-02-2026

| Patent document cited in search report | Publication date | Patent family member(s) | Publication date |
|---|---|---|---|
| US 2020320039 A1 | 08-10-2020 | CA 3077824 A1 | 05-10-2020 |
| | | US 2020320039 A1 | 08-10-2020 |
| | | US 2023273901 A1 | 31-08-2023 |
| | | US 2024403268 A1 | 05-12-2024 |
| US 2021271778 A1 | 02-09-2021 | US 2021232707 A1 | 29-07-2021 |
| | | US 2021271778 A1 | 02-09-2021 |
| | | US 2021273806 A1 | 02-09-2021 |
| | | US 2024089108 A1 | 14-03-2024 |
| | | US 2024097906 A1 | 21-03-2024 |
| | | US 2024097907 A1 | 21-03-2024 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421078645